# EUROPEAN PATENT SPECIFICATION

(11) **EP 2 635 770 B1**
(45) Date of publication and mention of the grant of the patent: **10.12.2014**
(21) Application number: 11785465.3
(22) Date of filing: 26.10.2011
(51) Int. Cl.: E21B 47/10

(54) **DISTRIBUTED FLUID VELOCITY SENSOR AND ASSOCIATED METHOD**
VERTEILTER STRÖMUNGSGESCHWINDIGKEITSSENSOR UND ZUGEHÖRIGES VERFAHREN
CAPTEUR DE LA VITESSE RÉPARTIE D'UN FLUIDE ET PROCÉDÉ ASSOCIÉ

(30) Priority: 01.11.2010 GB 201018382
(43) Date of publication of application: 11.09.2013
(73) Proprietor: Zenith Oilfield Technology Limited, Inverurie, Aberdeenshire AB51 5TB (GB)
(72) Inventor: SHANKS, David Sirda, Aberdeen, Aberdeenshire AB21 0PG (GB)
(74) Representative: Illingworth-Law, William Illingworth
(86) International application number: PCT/GB2011/052086
(87) International publication number: WO 2012/059738

(56) References cited:
- DE-A1- 10 052 922
- DE-C1- 19 950 111
- US-A- 3 981 187
- US-A1- 2008 185 138
- US-A1- 2008 317 095
- US-B1- 6 227 045
- US-B2- 7 409 858

## Description

The oil and gas industry is very dependent on well bore measuring techniques to provide information about what is actually happening deep in a well bore. Many surveys are done before oil or gas is produced, including seismic and rock porosity, water content and micro seismic. However, there are few methods of obtaining data which gives a broad measurement of the behaviour of the well over its whole length.

Point pressure and temperature sensors have been in commonplace use since the 1940's and production logging tools are also now in common use. It is quite common in the oil and gas industry to run optical distributed temperature sensing systems into oil wells to measure the temperature profile over the complete length of the well bore.

The point sensors only provide indications of what is happening at the position of the sensor. Logging tools measure the complete well bore, but not in real time and they can only be run periodically. Logging tools are also difficult to run when there are pumps in the well bore. Distributed temperature measurement is limited by the fact that, while the temperature profile can be interpreted to give information about other behaviour in the well bore, the temperature information in its raw state is not immediately useful in terms of determining the fluid produced (or injected), or more importantly the fluid flow rates.

The oil and gas industry is under pressure to achieve greater efficiency and increase production rates, all of which requires more understanding of reservoir storage and production behaviour. This has created a need for more 2-dimenstonai and 3-dimensionai measurements of reservoir behaviour. US7,409,858 and US 2008/0185138 are useful for understanding the prior art.

US7,409,858 discloses an elongate device for performing distributed fluid velocity measurement, comprising along its length: a heated core and a distributed temperature sensor.

It is therefore an aim of the present invention to address one or more of the above issues.

In a first aspect of the invention there is provided an elongate device for performing distributed fluid velocity measurement, comprising along its length:
a heated core,
at least one outer layer around said core, its outside surface defining an outside surface of the device, and
a distributed temperature sensor;
wherein said distributed temperature sensor is located between the heated core and the outside surface of the device.

Using such a device it is possible to measure heat loss from the core to its environment from, for example, the temperatures before and after a period of heating using the heated core.

Said distributed temperature sensor may comprise a fibre-optic distributed temperature sensor. Said distributed temperature sensor may be coiled helically around said heated core. Said distributed temperature sensor may be embedded within an insulation layer around said core. There may be at least one intervening layer between said insulation layer having said distributed temperature sensor embedded therein and said heated core. The insulation layer having the distributed temperature sensor embedded therein may be said outer layer of the device, or else said outer layer may be additional to this insulation layer comprising the distributed temperature sensor.

Said device may comprise a cable.

Said heated core may comprise a resistance wire.

Said device may further comprise control and processing means for controlling the heating of the heated core and processing the results obtained from the distributed temperature sensor.

Said device may further comprise a distributed fluid identification device for identifying a fluid that said device is immersed in at each of a plurality of measurement points of said device.

Said device may further comprise a distributed fluid identification device for identifying a fluid that said device is immersed in continuously over the length of said device.

Said device may be operable to: measure the ambient temperature of a fluid that it is immersed in at a plurality of measurement points along its length; turn on the heated core for a predetermined heating period, and take temperature measurements again at the same measurement points. Said device may be further operable to use obtained or pre-installed knowledge of the appropriate fluid characteristics so as to process said results obtained from the distributed temperature sensor to obtain distributed and/or point fluid velocity measurements for the fluid passing over the surface of said device. Said device may be further operable to determine real-time distributed and/or point fluid flow information from said distributed and/or point fluid velocity measurements. Said device may be further operable to use obtained or pre-installed knowledge of a number of fluid characteristics to identify which of said number of fluids it is immersed in at any one measurement point directly from the measured temperature at said particular measurement point after said predetermined heating period.

Said device may comprise a semi rigid construction to allow injection into well bores; for example said device may comprise a rigid element such as carbon fibre along its length.

In a second aspect of the invention there is provided a plurality of said devices operable to provide a 3-dimensional array of measurement points within a fluid in which said plurality of devices is immersed.

In a further aspect of the invention there is provided a method of performing distributed cooling measurements using the device, or plurality thereof, according to either of the above aspects of the invention, comprising the steps of:
immersing said device in one or more fluids along its length;
measuring the ambient temperature of said fluid or fluids at a plurality of measurement points along its length;
turning on the heated core for a predetermined heating period; and
measuring the temperature again at the same measurement points.

Said method may be further comprise using obtained or pre-installed knowledge of the appropriate fluid characteristics so as to process said distributed cooling measurements so as to obtain distributed and/or point fluid velocity measurements for the fluid or fluids passing over the surface of said device. Said method may comprise the further step of determining the real-time distributed and/or point fluid flow information from said distributed and/or point fluid velocity measurements.

Said method may comprise obtaining information to identify said fluid or fluids at the same time as performing said distributed cooling measurements.

Said method may comprise using obtained or pre-installed knowledge of a number of fluid characteristics to identify which of said number of fluids it is immersed in at any one measurement point directly from the measured temperature at said measurement point after said predetermined heating.

Said method may comprise deploying said device in a well bore, in a pipeline where it can be used to detect and/or locate leaks and/or branches, or in a fluid storage facility such as a tank, reservoir, separator etc. In the latter case, multiple devices may be installed as per the second aspect of the invention.

### BRIEF DESCRIPTION OF THE DRAWINGS

Embodiments of the invention will now be described, by way of example only, by reference to the accompanying drawings, in which:
Figure 1 depicts a cable based sensor array according to an embodiment of the invention;
Figures 2a and 2b show the cable based sensor of Figure 1 in cross-section and isometric views respectively;
Figure 3 a device comprising the cable based sensor of Figure 1 in combination with a distributed fluid identification sensor;
Figures 4a-4c show three examples of how a cable based sensor array may be installed in a well bore;
Figure 5 shows two examples of how a cable based sensor array may be installed in a pipeline; and
Figure 6 shows two examples of how such a cable based sensor array, or plurality thereof, may be installed in a tank, reservoir or similar.

### DETAILED DESCRIPTION OF THE EMBODIMENTS

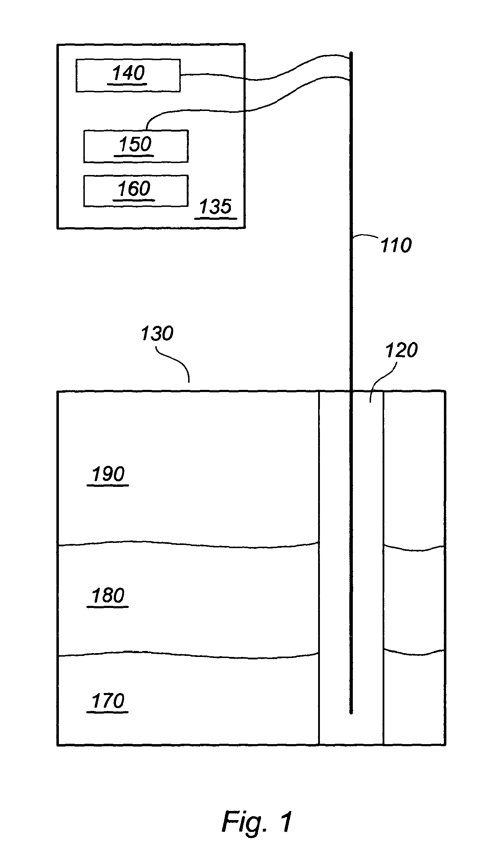

Figure 1 depicts a cable based sensor array for use in oil and gas wells, or any deep well bore, or pipe line. The system comprises a cable 110 which is deployed into the well bore 120 in reservoir 130 and a surface electronics control and processing unit 135, which processes and records the information. The surface electronics control and processing unit 135 shown here comprises a heater control 140, a fibre optic distributed temperature sensor (DTS) measurement apparatus 150 and a central data logger and data handling unit 160. The well bore 120 in this example contains a water layer 170, an oil layer 180 and a gas layer 190. The sensor array can be many kilometres long, and be able to determine distributed fluid flow rates along its full length.

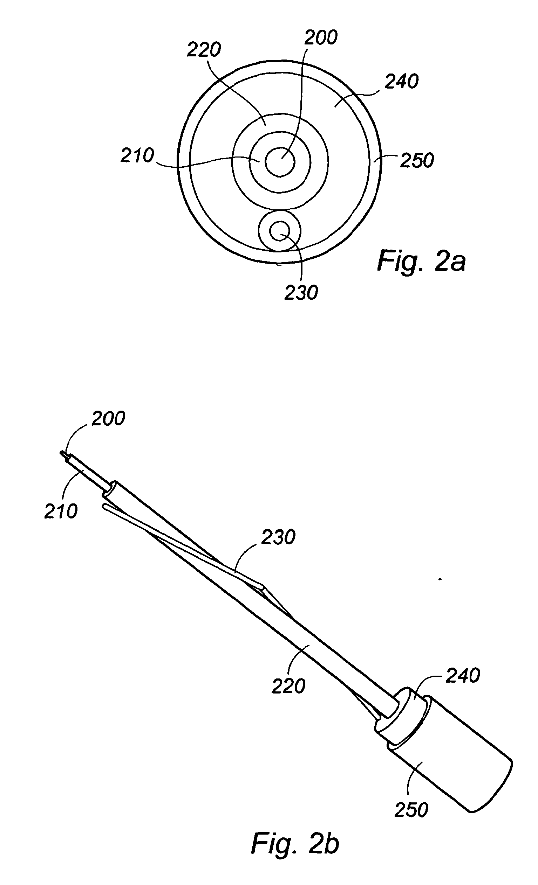

The cable based sensor array 110 is shown in greater detail in Figures 2a and 2b. It comprises a heated wire core 200 with a glass fibre sheath 210. Around this is a high temperature resistant sheath 220. Spiralled around the outside of sheath 220, and embedded within outer layer 240 is a fibre optic temperature sensor array 230, such as an 1/8 inch OD tube encapsulated fibre optic temperature probe. The cable based sensor array 110 is encapsulated by an outer shell 250.

The heated core 200 can comprise any heat source means (including a heated fluid), but in a main embodiment comprises a current carrying wire heated by resistance heating. Using a resistance wire simplifies temperature control compared to other heating methods, and also provides for a substantially uniform heat rise above ambient along its length.

The fibre optic sensor array 230 may be any of the types known in the art The use of intrinsic fibre optic sensors to provide distributed temperature sensing over very large distances is well known. For example, temperature can be measured by using a fibre that has evanescent loss that varies with temperature, or by analyzing the Roman scattering of the optical fibre. The fibre optic sensor array 230 is located between the heated wire core 200 and the outside surface of the device, along the sensing length of the device.

The cable based sensor array 110 operates by measuring the cooling effect resultant from the fluid or gas flowing over the surface of the cable. It does this, in one operational embodiment, by first measuring the ambient well bore temperature at each optical measurement point being considered, followed by switching the heated core on for a predetermined heating period, and then taking temperature measurements again at the same optical measurement points. The temperature rise caused by the heated core at each measurement point is dependent on the thermal cooling of the walls of the cable at that point, which in turn is dependent on, and therefore allows the measurement of, the fluid velocity characteristics around the cable surface at that point. The principle of fluid velocity measurement using cooling of a heated object is well proven and documented uses date back to 1904.

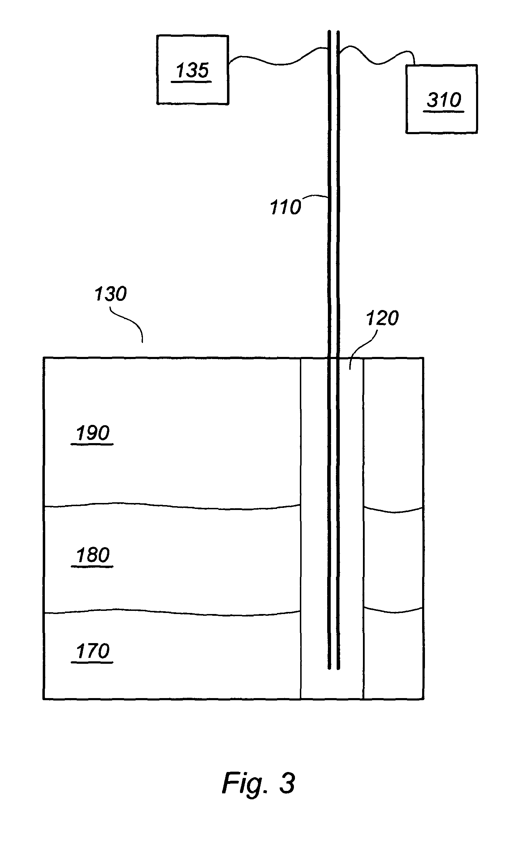

Of course, to obtain the of fluid velocity measurement from the cooling information, the nature of the fluids must be known since the cooling resultant from each fluid is different. Figure 3 shows a further embodiment comprising a combined cable based sensor array 110 with a distributed fluid type sensor array 300 to obtain a very powerful fluid analysis and measurement system. Both arrays have surface control and processing units 135, 310 (which may be comprised within the same unit). This combined array therefore can be used to measure the cable surface cooling and determine the fluid characteristics at all points in the array, and therefore determine the fluid velocity at any point in the sensor array. From this sensor surface velocity information the processing units can calculate fluid flow rates in real time.

The cable based sensor array 110 can also be used without any further sensors to determine the type of fluid present, provided that sufficient information on the thermal conductive character of the fluid present is known. If so, then the absolute temperature of the surface at the end of the predetermined heating period will be indicative of the nature of the fluid flowing. This is easily appreciated by considering the fact that gases typically will cool the surface of the sensor much less than liquids will. By using set values and having pre-observed the temperature rises created by different flowing fluids, the type of fluid can be determined directly from the final temperature reading.

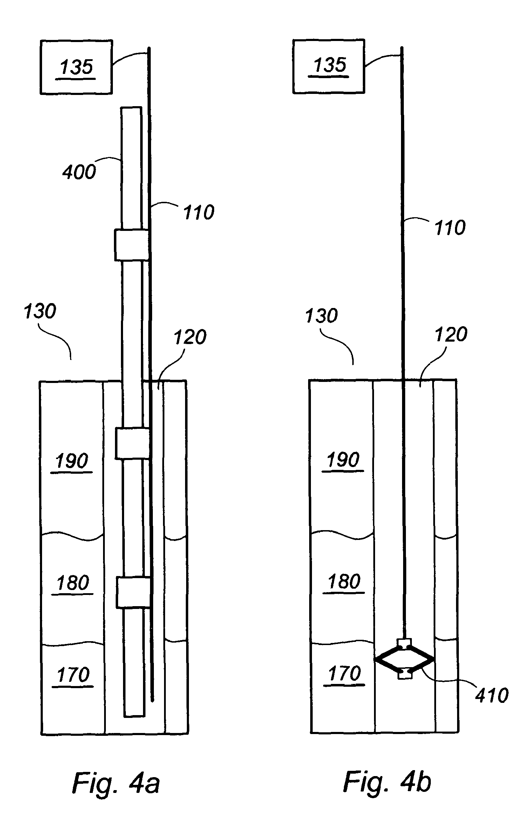

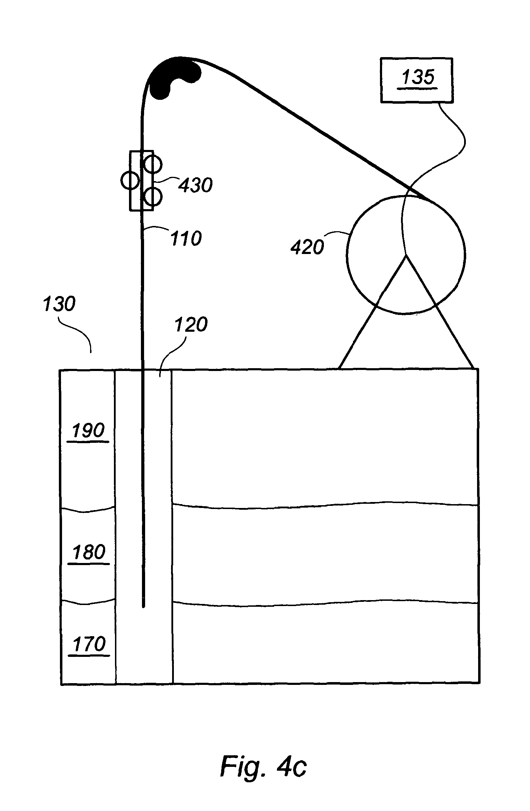

Figures 4a-4c show three examples of how such a cable based sensor array may be installed in a well bore. Figure 4a shows the cable based sensor array 110 installed permanently in the well bore 120, strapped to a tubing string 400. Figure 4b shows an alternative whereby the cable based sensor array 110 is lowered into a well through a lubricator (not shown) and hung off the well head freely suspended. At the bottom end may be weights and/or an anchor 410. By way of another example the cable based sensor array 110 may be deployed in a similar way to a logging tool using a spooler 420 and injector 430, and left in the well bore as shown in Figure 4c .In such an alternative, the cable system 110 could also be built as a semi rigid cable to enable it to be pushed into well bores. For example, the cable construction may be altered to include a rigid element such as carbon fibre.

The cable based sensor array 110 has many applications other than the measurement of fluid and gas flow characteristics over the length of an oil or gas well and the providing of information on the fluid being produced in each rock formation as already described.

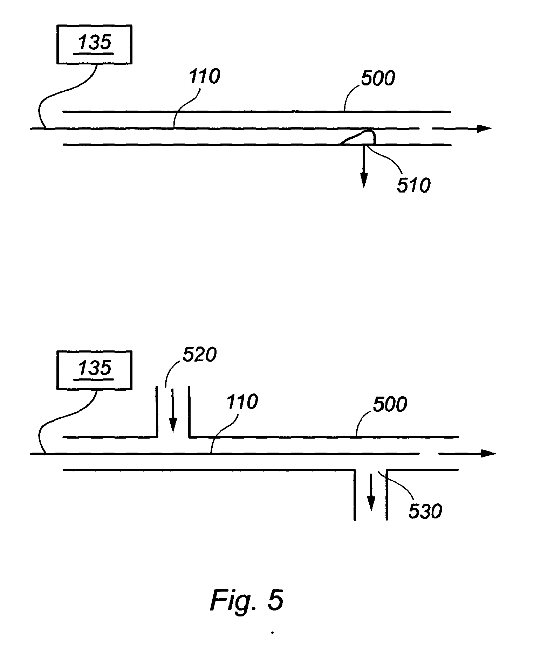

Figure 5 depicts an operational embodiment where the cable based sensor array 110 is deployed in pipelines 500 to determine the position of leaks 510, injection points 520 or outlet branches 530. In smaller forms it could be deployed across the diameter of a pipe to measure in real time the flow profile in a pipe.

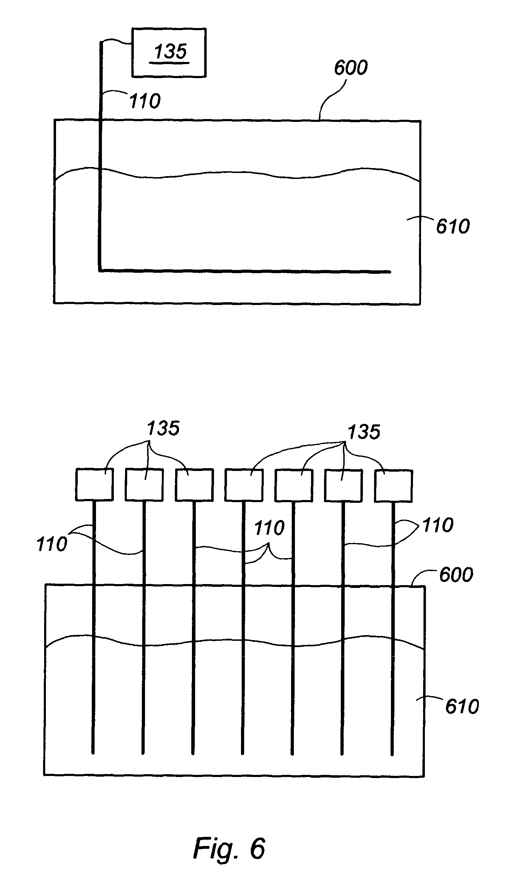

Figure 6 depicts a further operational embodiment where the cable based sensor array 110 is deployed in a storage tank, separator or even reservoir 600 or any other large body of fluid 610. In the first example only one cable based sensor array 110 is being used, which could take any configuration, whether L-shaped, as shown, or vertical, horizontal or any other 2- or 3-dimensional configuration. The second example depicts a plurality of cable based sensor arrays 110 (one row of sensor arrays 110 is shown, but there may be more) which can be used to create a 3-dimensional model of the flowing behaviour of the complete reservoir or tank. Again, each array 110 could take another configuration. Also, while each sensor array 110 is shown with a dedicated control and processing unit 135, the system may instead have a single control and processing unit for all the arrays 110, or a subset thereof.

While specific embodiments of the invention have been described above, it will be appreciated that the invention may be practiced otherwise than as described. For example, features of the invention, such as those for processing, may take the form of a computer program containing one or more sequences of machine-readable instructions describing a method as disclosed above, or a data storage medium (e.g. semiconductor memory, magnetic or optical disk) having such a computer program stored therein.

The descriptions above are intended to be illustrative, not limiting. Thus, it will be apparent to one skilled in the art that modifications may be made to the invention as described without departing from the scope of the claims set out below.

## Claims

1. An elongate device (110) for performing distributed fluid velocity measurement, comprising along its length:
a heated core (200),
at least one outer layer (250) around said core, the outside surface of said at least one outer layer defining an outside surface of the device, and
a distributed temperature sensor (230);
wherein said distributed temperature sensor is located between the heated core and the outside surface of the device;
and **characterised in that** said distributed temperature sensor is coiled helically around said heated core.

2. A device as claimed in claim 1 wherein said distributed temperature sensor comprises a fibre-optic distributed temperature sensor.

3. A device as claimed in any preceding claim wherein said distributed temperature sensor is embedded within an insulation layer (240) around said heated core.

4. A device as claimed in claim 3 wherein there is at least one intervening layer (210,220) between said insulation layer having said distributed temperature sensor embedded therein and said heated core.

5. A device as claimed in any preceding claim wherein said device comprises a cable.

6. A device as claimed in any preceding claim wherein said heated core comprises a resistance wire.

7. A device as claimed in any preceding claim comprising a distributed fluid identification device for identifying a fluid that said device is immersed in at each of a plurality of measurement points of said device.

8. A device as claimed in any preceding claim comprising a semi rigid construction to allow it to be injected into well bores.

9. A device as claimed in claim 8 comprising a rigid element such as carbon fibre along its length.

10. A plurality of any of the devices as claimed in claims 1 to 9 being operable to provide a 3-dimensional array of measurement points within a fluid in which said plurality of devices is immersed.

11. A method of performing distributed fluid velocity measurements using the device according to any of claims 1 to 9, or plurality thereof according to claim 10, comprising the steps of:
immersing said device(s) in one or more fluids along its length;
measuring the ambient temperature of said fluid or fluids at a plurality of measurement points along its length;
turning on the heated core (200) for a predetermined heating period: and
measuring the temperature again at the same measurement points.

12. A method as claimed in claim 11 further comprising the use of obtained or pre-installed knowledge of the appropriate fluid characteristics so as to process said distributed cooling measurements to obtain distributed and/or point fluid velocity measurements for the fluid or fluids passing over the surface of said device or devices.

13. A method as claimed in claim 12 further comprising the step of determining the real-time distributed and/or point fluid flow information from said distributed and/or point fluid velocity measurements.

14. A method as claimed in claim 12 or 13 further comprising obtaining information to identify said fluid or fluids at the same time as performing said distributed cooling measurements.

15. A method as claimed in claim 11 further comprising using obtained or pre-installed knowledge of a number of fluid characteristics to identify which of said number of fluids it is immersed in at any one measurement point directly from the measured temperature at said measurement point after said predetermined heating.

## Patentansprüche

1. Längliche Vorrichtung (110) zur Durchführung einer verteilten Fluidgeschwindigkeitsmessung, wobei die Vorrichtung entlang ihrer Länge Folgendes umfasst:
einen beheizten Kern (200),
wenigstens eine äußere Schicht (250) um den Kern, wobei die Außenfläche der wenigstens einen äußeren Schicht eine Außenfläche der Vorrichtung definiert, und
einen verteilten Temperatursensor (230),
wobei der verteilte Temperatursensor zwischen dem beheizten Kern und der Außenfläche der Vorrichtung angeordnet ist,
und **dadurch gekennzeichnet, dass** der verteilte Temperatursensor spiralförmig um den beheizten Kern gewickelt ist.

2. Vorrichtung nach Anspruch 1, wobei der verteilte Temperatursensor einen verteilten faseroptischen Temperatursensor umfasst.

3. Vorrichtung nach einem der vorhergehenden Ansprüche, wobei der verteilte Temperatursensor innerhalb einer Isolationsschicht (240) um den beheizten Kern eingebettet ist.

4. Vorrichtung nach Anspruch 3, wobei es wenigstens eine Zwischenschicht (210, 220) zwischen der Isolationsschicht, die den in derselben eingebetteten verteilten Temperatursensor aufweist, und dem beheizten Kern gibt.

5. Vorrichtung nach einem der vorhergehenden Ansprüche, wobei die Vorrichtung ein Kabel umfasst.

6. Vorrichtung nach einem der vorhergehenden Ansprüche, wobei der beheizte Kern einen Widerstandsdraht umfasst.

7. Vorrichtung nach einem der vorhergehenden Ansprüche, die eine verteilte Fluididentifizierungsvorrichtung umfasst, um ein Fluid zu identifizieren, in das die Vorrichtung an jedem von mehreren Messpunkten der Vorrichtung eingetaucht ist.

8. Vorrichtung nach einem der vorhergehenden Ansprüche, die einen halbstarren Aufbau umfasst, um zu ermöglichen, dass sie in Bohrlöcher eingepresst wird.

9. Vorrichtung nach Anspruch 8, die ein starres Element, wie beispielsweise Kohlefaser, entlang ihrer Länge umfasst.

10. Mehrere der Vorrichtungen nach einem der Ansprüche 1 bis 9, die funktionsfähig sind, um eine dreidimensionale Gruppierung von Messpunkten innerhalb eines Fluids, in dem die mehreren Vorrichtungen eingetaucht sind, bereitzustellen.

11. Verfahren zur Durchführung von verteilten Fluidgeschwindigkeitsmessungen unter Verwendung der Vorrichtung nach einem der Ansprüche 1 bis 9 oder mehrerer derselben nach Anspruch 10, das die folgenden Schritte umfasst:
das Eintauchen der Vorrichtung(en) in ein oder mehrere Fluids entlang ihrer Länge,
das Messen der Umgebungstemperatur des Fluids oder der Fluids an mehreren Messpunkten entlang ihrer Länge,
das Anschalten des beheizten Kerns (200) für einen vorbestimmten Heizzeitraum und
das erneute Messen der Temperatur an den gleichen Messpunkten.

12. Verfahren nach Anspruch 11, das ferner die Verwendung von erlangter oder vorinstallierter Kenntnis der passenden Fluidcharakteristika umfasst, um so die verteilten Abkühlungsmessungen zu verarbeiten, um verteilte und/oder Punkt-Fluidgeschwindigkeitsmessungen für das Fluid oder die Fluids, die über die Oberfläche der Vorrichtung oder Vorrichtungen hinweggehen, zu erlangen.

13. Verfahren nach Anspruch 12, das ferner den Schritt der Bestimmung der verteilten und/oder Punkt-Fluidströmungsinformationen in Echtzeit aus den verteilten und/oder Punkt-Fluidgeschwindigkeitsmessungen umfasst.

14. Verfahren nach Anspruch 12 oder 13, das ferner das Erlangen von Informationen zum Identifizieren des Fluids oder der Fluids zur gleichen Zeit wie das Durchführen der verteilten Abkühlungsmessungen umfasst.

15. Verfahren nach Anspruch 11, das ferner die Verwendung von erlangter oder vorinstallierter Kenntnis einer Anzahl von Fluidcharakteristika umfasst, um unmittelbar aus der gemessenen Temperatur an dem Messpunkt nach dem vorbestimmten Heizen zu identifizieren, in welchem von der Anzahl von Fluids sie an einem jeden Messpunkt eingetaucht ist.

## Revendications

1. Un dispositif allongé (110) pour réaliser une mesure de vitesse de fluide distribué, comprenant le long de sa longueur :
un coeur chauffé (200),
au moins une couche extérieure (250) autour dudit coeur, la surface externe de ladite au moins une couche définissant une surface externe du dispositif, et
un capteur de température distribué (230) ;
dans lequel ledit capteur de température distribué est localisé entre le coeur chauffé et la surface externe du dispositif ;
et **caractérisé en ce que** ledit capteur de température distribuée est enroulé de façon hélicoïdale autour dudit coeur chauffé.

2. Un dispositif tel que revendiqué dans la revendication 1 dans lequel ledit capteur de température distribuée comprend un capteur de température distribuée à fibre optique.

3. Un dispositif tel que revendiqué dans une quelconque revendication précédente dans lequel ledit capteur de température distribuée est implanté dans une couche d'isolation (240) autour dudit coeur chauffé.

4. Un dispositif tel que revendiqué dans la revendication 3 dans lequel il y a au moins une couche intermédiaire (210, 220) entre ladite couche d'isolation ayant ledit capteur de température distribuée implanté dans celle-ci et ledit coeur chauffé.

5. Un dispositif tel que revendiqué dans une quelconque revendication précédente dans lequel ledit dispositif comprend un câble.

6. Un dispositif tel que revendiqué dans une quelconque revendication précédente dans lequel ledit coeur chauffé comprend un fil de résistance.

7. Un dispositif tel que revendiqué dans une quelconque revendication précédente comprenant un dispositif d'identification de fluide distribué pour identifier un fluide dans lequel ledit dispositif est plongé en chacun d'une pluralité de points de mesure dudit dispositif.

8. Un dispositif tel que revendiqué dans une quelconque revendication précédente comprenant une construction semi-rigide pour lui permettre d'être injecté dans des trous de forage.

9. Un dispositif tel que revendiqué dans la revendication 8 comprenant un élément rigide tel qu'une fibre de carbone le long de sa longueur.

10. Une pluralité d'un quelconque des dispositifs tels que revendiqués dans les revendications 1 à 9 étant utilisable pour fournir un réseau en 3-dimensions de points de mesure dans un fluide dans lequel ladite pluralité de dispositifs est plongée.

11. Une méthode pour réaliser des mesures de vitesse de fluide distribué en utilisant le dispositif selon l'une quelconque des revendications 1 à 9, ou une pluralité de ceux-ci selon la revendication 10, comprenant les étapes de :
plonger ledit (ou lesdits) dispositif(s) dans un ou plusieurs fluides le long de sa longueur ;
mesurer la température ambiante dudit ou desdits fluide(s) en une pluralité de points de mesure le long de sa longueur ;
allumer le coeur chauffé (200) pour une période de chauffage prédéterminée : et
mesurer de nouveau la température aux même points de mesure.

12. Une méthode telle que revendiquée dans la revendication 11 comprenant en outre l'utilisation de connaissances obtenues ou pré-installées sur les caractéristiques de fluide appropriées de façon à traiter lesdites mesures de refroidissement distribué pour obtenir des mesures de vitesse de fluide distribué et/ou en un point pour le fluide ou les fluides passant sur la surface dudit ou desdits dispositif(s).

13. Une méthode telle que revendiquée dans la revendication 12 comprenant en outre l'étape de déterminer des informations de flux de fluides distribué en temps-réel et/ou en un point à partir desdites mesures de vitesse de fluide distribué et/ou en un point.

14. Une méthode telle que revendiquée dans la revendication 12 ou 13 comprenant en outre d'obtenir des informations pour identifier ledit ou lesdits fluide(s) en même temps que de réaliser lesdites mesures de refroidissement distribué.

15. Une méthode telle que revendiquée dans la revendication 11 comprenant en outre d'utiliser des connaissances obtenues ou pré-installées d'un nombre de caractéristiques de fluide pour identifier dans lequel parmi le nombre de fluides il est plongé en un point de mesure quelconque directement à partir de la température mesurée audit point de mesure après ledit chauffage prédéterminé.
